# EUROPEAN PATENT SPECIFICATION

(11) **EP 4 008 816 B1**
(45) Date of publication and mention of the grant of the patent: **20.08.2025**
(21) Application number: 21211054.8
(22) Date of filing: 29.11.2021
(51) Int. Cl.: D02G 3/48, B60C 9/00

(54) **FABRIC STRUCTURE FOR A TIRE**
GEWEBESTRUKTUR FÜR EINEN REIFEN
STRUCTURE DE TISSU POUR UN PNEU

(30) Priority: 03.12.2020 US 202017110427
(43) Date of publication of application: 08.06.2022
(73) Proprietor: The Goodyear Tire & Rubber Company, Akron, OH 44316 (US)
(72) Inventor: CELIK, Ceyhan, Stow, 44224 (US); REITER, Leonard James, Norton, 44203 (US)
(74) Representative: Kutsch, Bernd

(56) References cited:
- EP-A2- 0 374 357
- US-A- 3 040 797
- US-A- 4 544 603

## Description

### Field of the Invention

The present invention relates to both pneumatic and non-pneumatic tires, and more specifically, to a fabric structure that can be used in a tire component such as interposed between a tread portion and other structures of the tire.

### Background of the Invention

Fabric belt assemblies and other fabric structures for tires are known. In one conventional assembly, a folded ply may be reinforced with cords of high modulus material and may have an overall width at least equal to that of the tread portion. Each of its lateral sides may be folded back, in a radially outward direction, around two unfolded single cut plies. The reinforcing cords of the folded ply may form an angle between 20 and 60 degrees relative to the with respect to the equatorial plane of the tire with those of the two single cut plies forming equal and opposed angles with respect to the equatorial plane of the tire.

Because of material limitations, conventional tire constructions have tended to be robust (e.g., heavy and many components, etc.). Such constructions may tend to have a high rolling resistance, which lowers fuel economy; and the bulk of the construction may have a tendency to limit handling response, as well as increasing material cost. It has been a continuing goal to identify lightweight and high strength materials, and to find suitable uses for such materials in tires, such that the weight of tires may be reduced while other properties are maintained.

Conventional aramid reinforcement material has shown fatigue resistance. This property made the material suitable for application of a relatively low twist to the cord, which made it possible to maintain durability and elongation characteristics in a lower density material. One conventional belt assembly has shown improved handling properties when reinforcement cords were reduced to 1100 dTex from 1670 dTex. One conventional overlay structure may be reinforced with aramid cords having a twist level between 6 TPI and 14 TPI (TPI = turn per 2.54 cm).

One conventional belt structure may be reinforced with 420 to 1100 dTex aramid cords, with a measured toughness of 30 MPa to 50 MPa, an initial modulus 15,000 MPa to 40,000 MPa, a tenacity of 140 cN/Tex to 200 cN/Tex, and a dynamic flex fatigue retained break strength of 50% to 100%. These belts may be reinforced with reinforcement cords extending parallel to one another and making an angle of 10° to 40° with respect to the equatorial plane (EP) of the tire. The belt assembly may comprise a folded belt with folded portions on each lateral side folded radially over a cut belt. The axially outer portions of the folded belt may be folded in a radially outward direction and disposed radially outward of the cut belt.

Another conventional tire may have an overlay structure disposed radially outward from the belt assembly. Helical convolutions of a ribbon may be wound axially across two single cut plies such that the convolutions are in abutting contact with each other. The ribbon may be reinforced with cords of textile material.

US 3,040,797 discloses finishing strips for tires, which have a fabric material. The fabric comprises interwoven warp and weft elements. The warp elements comprise a plurality of filaments of natural or synthetic textile substances. The weft elements are single or monofilaments which can have any suitable cross section, e.g., round, flat, rectangular, or other cross-sections.

EP 0 374 357 A2 discloses high tenacity, oblong cross-section monofilaments.

US 4,544,603 discloses reinforcing elements for tires, comprising a plurality of elongated metallic members with substantially rectangular cross-section. A single wrap member is helically disposed around the elongated metallic members such that each turn of the wrap filament member is spaced apart from the next adjacent turns of the wrap.

### Summary of the Invention

The invention relates to a fabric layer in accordance with claim 1 and to a tire in accordance with claim 5.

Dependent claims refer to preferred embodiments of the invention.

According to a preferred aspect of the tire, a lateral stiffness of the fabric layer prevents lateral bending of the monofilament.

According to a preferred aspect of the tire, a lateral stiffness of the fabric layer prevents the monofilament from being moved by an external penetrating sharp object.

According to a preferred aspect of the fabric layer, the warp cord comprises nylon.

According to a preferred aspect of the fabric layer, the warp cord comprises nylon and aramid.

According to a preferred aspect of the fabric layer, a lateral stiffness of the fabric layer prevents lateral bending of the monofilament.

According to a preferred aspect of the fabric layer, a lateral stiffness of the fabric layer prevents the monofilament from being moved laterally by an external penetrating sharp object.

According to a preferred aspect of the fabric layer, the fabric layer maintains the warp cord at a constant lateral position.

According to a preferred aspect of the fabric layer, the weft cords maintain the warp cord at a constant lateral position.

A tire in accordance with a preferred aspect of the present invention includes a fabric layer with a plurality of warp cords each comprising a monofilament and a multifilament wrapped around the monofilament; and a plurality of weft cords extending transversely over and under the warp cords, the monofilaments being nylon, the multifilaments being glass, the wefts cords being aramid.

According to a preferred aspect of the tire, the weft cords maintain the warp cords at constant lateral relative positions.

### Definitions

"Aramid" and "Aromatic polyamide" both mean a manufactured fiber in which the fiber-forming substance is generally recognized as a long chain of synthetic aromatic polyamide in which at least 85% of the amide linkages are attached directly to the two aromatic rings. Representative of an aramid or aromatic polyamide is a poly (p-phenyleneterephthalamide).

"Aspect ratio" means the ratio of a tire section height to its section width. For example, the aspect ratio may be the maximum axial distance between the exterior of the tire sidewalls when unloaded and inflated at normal pressure, multiplied by 100% for expression as a percentage. Low aspect ratio may mean a tire having an aspect ratio of 65 and below.

"Axial" and "axially" refer to lines or directions that are parallel to the axis of rotation of the tire.

"Cord" means one of the reinforcement strands which the reinforcement structures of the tire comprise.

"Cord angle" means the acute angle, left or right in a plan view of the tire, formed by a cord with respect to the equatorial plane (EP). The "cord angle" is measured in a cured but uninflated tire.

"Cord twist" means each yarn of the cord has its component filaments twisted together a given number of turns per unit of length of the yarn (usually expressed in turns per inch (TPI) or turns per meter (TPM)) and additionally the yarns are twisted together a given number of turns per unit of length of the cord. The direction of twist refers to the direction of slope of the spirals of a yarn or cord when it is held vertically. If the slope of the spirals conforms in direction to the slope of the letter "S", then the twist is called "S" or "left hand". If the slope of the spirals conforms in direction to the slope of the letter "Z", then the twist is called "Z" or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "dtex" is understood to mean the weight in grams of 10,000 meters of a yarn before the yarn has a twist imparted thereto.

"Cut belt ply" refers to a belt having a width less than the tread width, which lies flat over the carcass plies in the crown area of the tire.

"Denier" means the weight in grams per 9000 meters (unit for expressing linear density).

"Dtex" means the weight in grams per 10,000 meters.

"Equatorial plane (EP)" means the plane perpendicular to the tire's axis of rotation and passing through the center of its tread; or the plane containing the circumferential centerline of the tread.

"Fabric" means a network of essentially unidirectionally extending cords, which may be twisted, and which in turn are composed of a plurality of a multiplicity of filaments (which may also be twisted) of a high modulus material.

"Fiber" is a unit of matter, either natural or man-made, that forms the basic element of filaments; characterized by having a length at least 100 times its diameter or width.

"Filament count" means the number of filaments that make up a yarn. Example: 1000 denier polyester has approximately 190 filaments.

"Multifilament" means a bundle of individual filaments (usually hundreds of filaments in a bundle) forming a flexible cord structure.

"Radial" and "radially" mean directions radially toward or away from the axis of rotation of the tire.

"Warp" means, in weaving/forming of fabric, lengthwise or longitudinal warp yarns, filaments, threads, cables, fibers, and/or cords may be held stationary in tension on a frame or loom while transverse "weft" yarns, filaments, threads, cables, fibers, and/or cords may be drawn through, and inserted over-and-under, the warp yarns, filaments, threads, fibers, and/or cords.

"Weft" means, in weaving/forming of fabric, transverse yarns, filaments, threads, cables, fibers, and/or cords may be drawn through, and inserted over-and-under, "warp" yarns, filaments, threads, cables, fibers, and/or cords. A single weft yarn, filament, thread, cable, fiber, and/or cord of a weft crossing the "warp" yarns, filaments, threads, cables, and/or cords may be termed a "pick". Conventional weft yarns, filaments, threads, cables, fibers, and/or cords may only function to maintain the lateral spacing of the "warp" yarns, filaments, threads, cables, fibers, and/or cords during assembly and pre-installation handling.

"Yarn" is a generic term for a continuous strand of textile fibers or filaments. Yarn occurs in the following forms: (1) a number of fibers twisted together; (2) a number of filaments laid together without twist; (3) a number of filaments laid together with a degree of twist; (4) a single filament with or without twist (monofilament); and (5) a narrow strip of material with or without twist.

### Brief Description of the Drawings

The invention will be described by way of example and with reference to the accompanying drawings in which:
FIG. 1 is a schematic cross-sectional view of an example tire for use with the present invention;
FIG. 2 is a schematic cross sectional view of another example tire for use with the present invention;
FIG. 3 is a schematic perspective view of an example single flat monofilament wrapped with one multifilament cord;
FIG. 4 is a schematic perspective view of a construction having several wrapped monofilaments; and
FIG. 5 is a schematic perspective view of an example fabric in accordance with the present invention.

### Detailed Description of Preferred Embodiments of the Present Invention

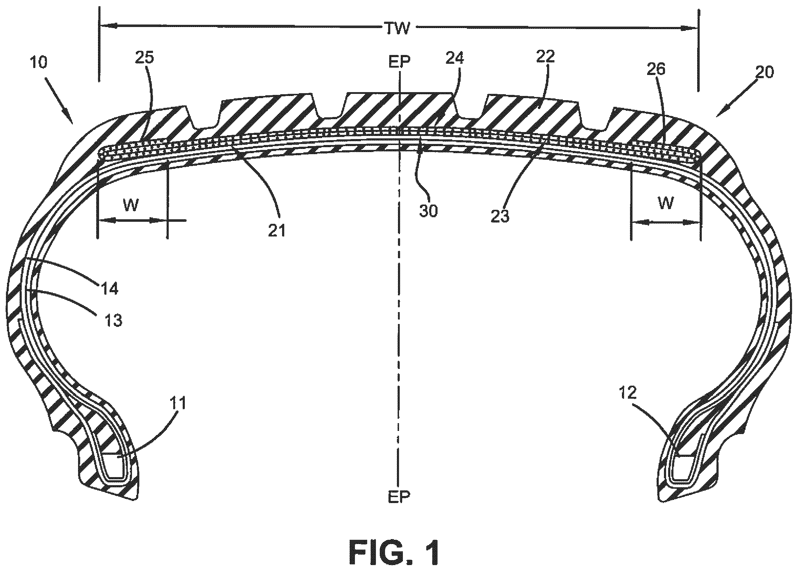

With reference to FIG. 1, there is represented an example tire 10, pneumatic or non-pneumatic, for use with the present invention. The tire 10 preferably has a pair of substantially inextensible bead cores 11, 12 axially spaced apart with two carcass plies 13, 14 extending between the bead cores. The carcass plies may be folded axially and radially outward about each of the bead cores 11, 12 and be reinforced by cords substantially parallel to each other in the same ply at an angle of 50° to 90° with respect to the equatorial plane (EP) of the tire 10. Cords belonging to adjacent carcass plies 13, 14 may generally have opposite angles crossing each other at an angle of 2 degrees to 5 degrees. The cords of the carcass plies 13, 14 may be any suitable material, such as steel, nylon, rayon, aramid, and/or polyester. The tire 10 may have carcass plies 13,14 of side-by-side polyester or rayon cables and a crown area 20 reinforced by a belt assembly 21 located radially inward of the tire tread 22. The tire 10 may have an aspect ratio between 25 and 65.

The tire 10 may further include a belt structure 30 with an essentially rigid folded belt 23 and a cut belt 24 disposed radially outward of the folded belt. Both belts 23, 24 may be reinforced with, for example, aramid cables or yarns. The belts 23, 24 may have identical or different constructions. Such cords may be treated (coated) with one or more layers of adhesive in a process known as dipping. The modulus of a treated cord may be a function of the twist of the different yarns used in the cord, the cord twist, and the manner that the cord is subjected to the dipping operation.

Cords of the folded belt 23 may be substantially parallel to each other and make an angle of 15° to 40° with respect to the equatorial plane (EP) of the tire 10. The axially outer portions of the folded belt 23 may be folded back on both lateral sides in a radially outward direction over axial edges of the cut belt 24 with the folded portions 25, 26 being symmetrical with respect to the equatorial plane (EP). The folded portions 25, 26 may each have a transverse width between 5% and 30%, or 15% and 30% of the tread width (TW).

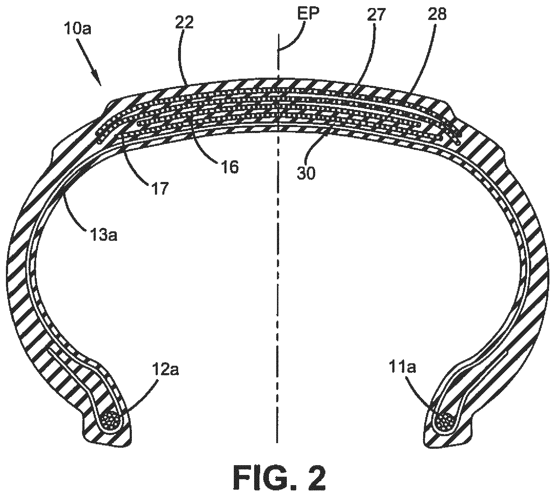

As shown in FIG. 2, another example tire 10a, for use with the present invention, includes one carcass ply 13a wrapped around beads 11a, 12a. The belt structure 30 preferably includes belts 16, 17 reinforced with aramid cords and overlays 27, 28 disposed radially outward of the belts 16, 17. The belts 16, 17 may have identical or different constructions. The overlays 27, 28 may be single sheets of overlay material, a cut overlay (e.g., reinforcement cords in the overlay discontinuous at random locations throughout the tire), and/or a spiral overlay. The reinforcing cords in the overlay 27, 28 may comprise nylon, polyester, polyamine, aramid, and/or any other suitable overlay reinforcement material.

Generally, it may be advantageous to provide improved cut and puncture resistance to tires, such as the tires 10, 10a described above, without degrading other functional characteristics of the tires. Further, an increased cut and puncture resistant protective cord, which may be applied on tires during retreading, would also be desirable (e.g., easily skived in retread surface preparations, etc.).

Additionally, a flat/obround shape monofilament may be used to resist the monofilament from being pushed out/sideways by a penetrating object. All else being equal, a monofilament having a round/circular cross-section may have less lateral bending stiffness than an obround/flat cross-section monofilament at an equivalent cross-sectional area. Therefore, the flat/obround monofilament cord may resist against being pushed sideways by a penetrating object more than a round/circular cross-section monofilament cord. The increased width may thereby assist the flat/obround monofilament in stopping penetrating objects more than a round cross-section monofilament.

To increase the strength of this flat monofilament construction, in accordance with the present invention, each monofilament is wrapped with another cord, such as, for example, an aramid multifilament cord and/or a glass multifilament cord. The wrapping may be achieved by hybrid cord twisting.

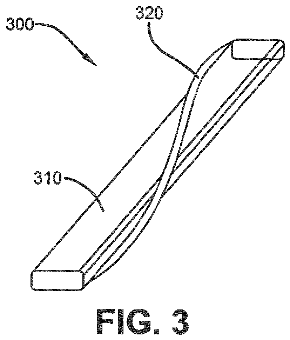

As shown in FIG. 3, one construction 300 has a single flat monofilament 310 wrapped with one multifilament cord 320. The monofilament 310 is preferably nylon and/or other suitable material. The multifilament(s) are preferably aramid, glass, carbon, and/or other suitable material. Preferably, the flat monofilament has in cross-section a ratio of width (lateral width) to height or thickness (radial height) in a range of from 1.2 to 5, more preferably from 1.5 to 3.5.

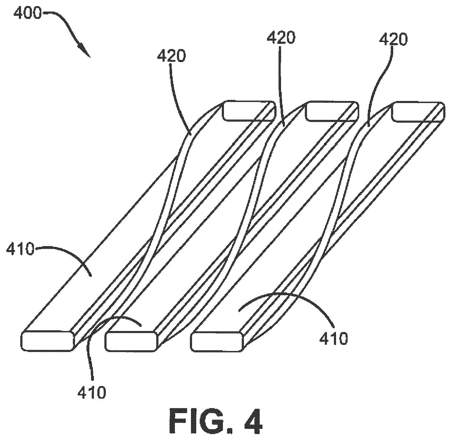

As shown in FIG. 4, another construction 400 has a plurality of single flat monofilaments 410 wrapped with one multifilament cord 420. The monofilaments 410 are preferably nylon and/or other suitable material. The multifilament(s) are preferably aramid, glass, carbon, and/or other suitable material. Preferably, the flat monofilament has in cross-section a ratio of width (lateral width) to height or thickness (radial height) in a range of from 1.2 to 5, more preferably from 1.5 to 3.5.

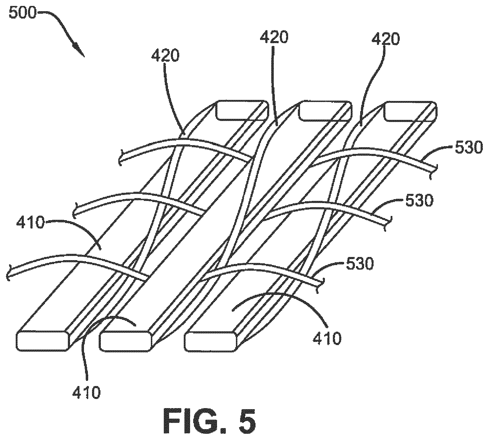

As shown in FIG. 5, this plural construction 410/420 is combined with a skeleton of weft cords 530 to create a woven fabric 500 further enhancing cut and puncture resistance. The monofilaments 410 are preferably nylon and/or other suitable material. The multifilament(s) 420 is preferably aramid, glass, carbon, and/or other suitable material. The wefts cords 530 are preferably aramid, glass, carbon, and/or other suitable material.

In accordance with the present invention, structures of the belts 16, 17, 23, 24, 30, overlays 27, 28, carcass 13, 14, reinforcement for the crown area 20, chippers, flippers, toe guards, protective layers, and/or any other suitable plies/layers of the tire 10 may include the above-described constructions 300, 400, 500, alone or in combination.

## Claims

1. A fabric layer (500) for use in a tire (10), the fabric layer including a single flat monofilament (410) wrapped with one or more multifilament cords (420),
wherein the single flat monofilament (410) wrapped with one or more multifilament cords (420) is used as a warp cord, and wherein the fabric layer further comprises a plurality of weft cords (530) extending transversely over and under the warp cords.

2. The fabric layer of claim 1 wherein the monofilament is nylon.

3. The fabric layer of claim 1 or 2 wherein the multifilament cords (420) are made of a material selected from the group consisting of aramid, glass, and carbon.

4. The fabric layer of claim 1 wherein the monofilaments (410) are made from nylon, the multifilaments (420) are made of glass and the wefts cords (530) are made from aramid.

5. A tire (10, 10a) having a component comprising the fabric layer in accordance with at least one of the previous claims.

6. The tire of claim 5 having at least one carcass ply (13, 14), a tread (22) disposed radially outward of a crown region (20) of the at least one carcass ply (13, 14), and a belt structure (21, 30).

7. The tire of claim 6 wherein the belt structure (21, 30) has an overall axial width equal or substantially equal to a tread width.

8. The tire of claim 6 or 7 wherein the fabric layer is interposed between a tread portion and the belt structure (21, 30) of the tire (10).

## Patentansprüche

1. Gewebeschicht (500) zur Verwendung in einem Luftreifen (10); wobei die Gewebeschicht ein einzelnes flaches Monofilament (410) umfasst, das von einem oder mehreren Multifilamentkorden (420) umgeben ist; wobei das einzelne flache Monofilament (410), das von einem oder mehreren Multifilamentkorden (420) umgeben ist, als Kettkord verwendet wird; und wobei die Gewebeschicht ferner eine Anzahl von Schusskorden (530) umfasst, die sich in der Querrichtung über und unter den Kettkorden erstrecken.

2. Gewebeschicht nach Anspruch 1, wobei das Monofilament Nylon ist.

3. Gewebeschicht nach Anspruch 1 oder 2, wobei die Multifilamentkorden (420) aus Aramid, Glas und Carbon ausgeführt sind.

4. Gewebeschicht nach Anspruch 1, wobei die Monofilamente (410) aus Nylon, die Multifilamente (420) aus Glas und die Schusskorde (530) aus Aramid ausgeführt sind.

5. Luftreifen (10, 10a), der eine Komponente besitzt, die die Gewebeschicht nach mindestens einem der vorhergehenden Ansprüche umfasst.

6. Luftreifen nach Anspruch 5, der mindestens eine Karkassenlage (13, 14), eine Lauffläche (22), die in der radialen Richtung außerhalb eines eine Zenitlage bildenden Bereichs (20) angebracht ist, und eine Gürtelstruktur (21, 30) aufweist.

7. Luftreifen nach Anspruch 6, wobei die Gürtelstruktur (21, 30) eine axiale Gesamtbreite besitzt, die gleich oder im Wesentlichen gleich einer Breite der Lauffläche ist.

8. Luftreifen nach Anspruch 6 oder 7, wobei die Gewebeschicht zwischen einem die Lauffläche bildenden Abschnitt und der Gürtelstruktur (21, 30) des Luftreifens angeordnet ist.

## Revendications

1. Couche de tissu (500) pour son utilisation dans un bandage pneumatique (10) ; dans laquelle la couche de tissu englobe un monofilament plat unique (410) entouré d'un ou de plusieurs câblés (420) du type à multifilaments ; dans laquelle le monofilament plat unique (410) entouré d'un ou de plusieurs câblés (420) du type à multifilaments est utilisé à titre de câblé de chaîne ; et dans lequel la couche de tissu comprend en outre un certain nombre de câblés de trame (530) qui s'étendent dans la direction transversale au-dessus et en dessous des câblés de chaîne.

2. Couche de tissu selon la revendication 1, dans laquelle le monofilament est du nylon.

3. Couche de tissu selon la revendication 1 ou 2, dans laquelle les câblés (420) du type à multifilaments sont réalisés à partir d'aramide, de verre et de carbone.

4. Couche de tissu selon la revendication 1, dans laquelle les monofilaments (410) sont réalisés à partir de nylon, les multifilaments (420) sont réalisés à partir de verre et les câblés de trame (530) sont réalisés à partir d'aramide.

5. Bandage pneumatique (10, 10a) qui possède un composant qui comprend la couche de tissu selon au moins une des revendications précédentes.

6. Bandage pneumatique selon la revendication 5, qui possède au moins une nappe de carcasse (13, 14), une bande de roulement (22) qui est disposée, dans la direction radiale, à l'extérieur d'une zone (20) faisant office de nappe de sommet, et une structure de ceintures (21, 30).

7. Bandage pneumatique selon la revendication 6, dans lequel la structure de ceintures (21, 30) possède une largeur axiale globale qui est égale ou essentiellement égale à une largeur de bande de roulement.

8. Bandage pneumatique selon la revendication 6 ou 7, dans lequel la couche de tissu est intercalée entre une portion faisant office de bande de roulement et la structure de ceintures (21, 30) du bandage pneumatique.
